(19) Europäisches Patentamt / European Patent Office / Office européen des brevets

(11) **EP 2 395 292 B1**

(12) **EUROPEAN PATENT SPECIFICATION**

(45) Date of publication and mention of the grant of the patent:
**08.05.2019 Bulletin 2019/19**

(51) Int Cl.:
**F24D 19/10** *(2006.01)*

(21) Application number: **09839690.6**

(22) Date of filing: **15.09.2009**

(86) International application number:
**PCT/JP2009/066061**

(87) International publication number:
**WO 2010/089916 (12.08.2010 Gazette 2010/32)**

(54) **OPERATING STATE SIMULATION DEVICE AND METHOD FOR DESIGNING HEAT PUMP HOT-WATER SUPPLY SYSTEM**

BETRIEBSZUSTANDSSIMULATIONSVORRICHTUNG UND VERFAHREN ZUM KONSTRUIEREN EINES WÄRMEPUMPENWARMWASSERVERSORGUNGSSYSTEMS

DISPOSITIF DE SIMULATION D'ÉTAT DE FONCTIONNEMENT ET PROCÉDÉ POUR CONCEVOIR UN SYSTÈME D'ALIMENTATION EN EAU CHAUDE DE POMPE À CHALEUR

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **03.02.2009 JP 2009022735**

(43) Date of publication of application:
**14.12.2011 Bulletin 2011/50**

(73) Proprietor: **Mitsubishi Electric Corporation Tokyo 100-8310 (JP)**

(72) Inventors:
• **ENOMOTO, Hiroshi**
  **Tokyo 100-8310 (JP)**
• **ICHIDA, Yoshio**
  **Tokyo 100-8310 (JP)**
• **MATSUZAWA, Koji**
  **Tokyo 100-8310 (JP)**
• **TAKAHASHI, Yoshihiro**
  **Tokyo 100-8310 (JP)**

(74) Representative: **Sajda, Wolf E. et al**
  **Meissner Bolte Patentanwälte**
  **Rechtsanwälte Partnerschaft mbB**
  **Postfach 86 06 24**
  **81633 München (DE)**

(56) References cited:
  JP-A- 2003 120 982    JP-A- 2003 161 514
  JP-A- 2003 207 189    JP-A- 2004 310 456
  JP-A- 2007 011 919    JP-A- 2007 032 880

JP-A- 2007 040 613

• DORER V ET AL: "Energy and CO2 emissions performance assessment of residential micro-cogeneration systems with dynamic whole-building simulation programs", ENERGY CONVERSION AND MANAGEMENT, ELSEVIER SCIENCE PUBLISHERS, OXFORD, GB, [Online] vol. 50, no. 3, 9 December 2008 (2008-12-09), pages 648-657, XP025922276, ISSN: 0196-8904, DOI: 10.1016/J.ENCONMAN.2008.10.012 [retrieved on 2008-12-09]
• BAEK N C ET AL: "A study on the design and analysis of a heat pump heating system using wastewater as a heat source", SOLAR ENERGY, PERGAMON PRESS. OXFORD, GB, vol. 78, no. 3, 1 March 2005 (2005-03-01), pages 427-440, XP027840629, ISSN: 0038-092X [retrieved on 2005-03-01]
• J. A. Clarke ET AL: "Simulation-assisted control in building energy management systems", Energy and Buildings, Volume 34, Issue 9, 1 October 2002 (2002-10-01), pages 933-940, XP055074538, DOI: http://dx.doi.org/10.1016/S0378-7788(02)00068-3 Retrieved from the Internet: URL:http://www.sciencedirect.com/science/article/pii/S0378778802000683 [retrieved on 2013-08-08]

- **ZHIQIANG LIU ET AL: "Dynamic simulation of air-source heat pump during hot-gas defrost", APPLIED THERMAL ENGINEERING, vol. 23, no. 6, 1 April 2003 (2003-04-01), pages 675-685, XP055074539, ISSN: 1359-4311, DOI: 10.1016/S1359-4311(03)00002-4**
- **FIKSEL A ET AL: "Developments to the TRNSYS simulation program", JOURNAL OF SOLAR ENERGY ENGINEERING, ASME INTERNATIONAL, US, vol. 117, no. 2, 1 May 1995 (1995-05-01), pages 123-127, XP008164011, ISSN: 0199-6231, DOI: 10.1115/1.2870836 [retrieved on 2008-02-14]**
- **JOE QIN S ET AL: "A survey of industrial model predictive control technology", CONTROL ENGINEERING PRACTICE, PERGAMON PRESS, OXFORD, GB, vol. 11, 1 January 2003 (2003-01-01), pages 733-764, XP002435295, ISSN: 0967-0661, DOI: 10.1016/S0967-0661(02)00186-7**

**Description**

TECHNICAL FIELD

The present invention relates to a design support apparatus for a heat pump type hot-water supply system which warms water by heat exchange between water and heat obtained by a refrigeration cycle of a heat pump, by using a heat exchanger, and which supplies the warmed water to a hot-water supply equipment or a hot-water radiant heating equipment.

BACKGROUND ART

Conventionally, there has been a design support apparatus for supporting design of various air-conditioning apparatuses included in air-conditioning equipment. For example, there is a design support apparatus disclosed in Japanese Unexamined Patent Application Publication JP-A-2003-120 982 (Patent Document 1) which generates an air-conditioning load pattern based on a relation between weather data on temperature and humidity and an air-conditioning load, simulates a heat supply pattern satisfying the air-conditioning load based on a connection structure of the air-conditioning equipment designed by the designer and on apparatus characteristics of each equipment, and calculates annual running costs based on amounts of fuel and electric power used for heat supply and on prices of fuel and electric power charge.

If the calculation result does not reach a design objective, the simulation operation is repeated by this design support apparatus while changing the structure of air-conditioning apparatuses. Thereby, the structure of the apparatus that costs the least can be obtained.

Moreover, there is another design support apparatus disclosed in Japanese Unexamined Patent Application Publication JP-A-2003-207 189 (Patent Document 2) which obtains parameters capable of achieving a design objective, by repeating simulation, with treating air-conditioning apparatus design elements that can be quantified as design parameters, while automatically changing the parameters by using an optimization algorithm.
The publication Dorer V. et al. "Energy and CO2 emissions performance assessment of residential micro-cogeneration systems with dynamic whole-building simulation programs", ENERGY CONVERSION AND MANAGEMENT, ELSEVIER SCIENCE PUBLISHERS, OXFORD, GB, [Online] vol. 50, no. 3, 9 December 2008 (2008-12-09), pages 648-657, XP025922276, ISSN: 0196-8904, DOI: 10.1016/J. ENCONMAN.2008.10.012 is also considered relevant prior art discussing a simulation apparatus according to the preamble of claim 1.

CITATION LIST

Patent Literature

| Patent Document 1: | Japanese Unexamined Patent Application Publication JP-A-2003-120 982 (Fig. 1) |
| Patent Document 2: | Japanese Unexamined Patent Application Publication JP-A-2003-207 189 (Fig. 1) |

SUMMARY OF INVENTION

Technical Problem

Since the design support apparatuses of the air-conditioning system of Patent Documents 1 and 2 are on the assumption of heat supply satisfying an air-conditioning load, the evaluation value of a design parameter which does not supply sufficient heat is low and, therefore such a parameter is excluded from design candidates.

However, in the heat pump type hot-water supply system which supplies heat by appropriately switching between the heating and the warming of the hot-water supply tank, it is impossible to completely avoid a situation in which temporarily occurs a shortage of heat quantity, such as stopping heat supply to the heating equipment at the time of warming the hot-water supply tank. Although there is a case of installing a backup electric heater or boiler as an auxiliary heat source for compensating the shortage of heat, if, for example, the electric heater is started as an auxiliary heat source at the time of shortage of heat, since it consumes power twice or three times as much as that of the heat pump, the amount of $CO_2$ emission increases in the whole system. Therefore, as long as the shortage of heat is in a short time and the temperature decrease is small (within the range of an allowable value), it is preferable not to activate the auxiliary heat source as much as possible.

However, in conventional design support apparatuses, since an allowable value of insufficient quantity of heat is not applied in evaluation conditions, the condition that an auxiliary heat source covers all the insufficient quantity of heat is selected. For this reason, there occurs a problem of design with much amount of $CO_2$ emission.

It is an object of the present invention to provide a design support apparatus of a heat pump type hot-water supply system, which presents design specifications of the heat pump type hot-water supply system in which an insufficient quantity of heat is within an allowable value and an amount of $CO_2$ emission is small.

Solution to Problem

An operation state simulation apparatus according to the present invention for simulating an operation state of a heat pump type hot-water supply system which supplies hot water by using a heat pump is given in claim 1. A method and computer readable medium related to the apparatus are given in claims 2 and 3, respectively.

ADVANTAGEOUS EFFECTS OF INVENTION

According to the present invention, it is possible to provide a design support apparatus which presents design specifications of a heat pump type hot-water supply system in which an insufficient quantity of heat is within an allowable value and an amount of $CO_2$ emission is small.

BRIEF DESCRIPTION OF DRAWINGS

Fig. 1 shows an example of a heat pump type hot-water supply system according to Embodiment 1;

Fig. 2 shows a block diagram of a design support apparatus 100 according to Embodiment 1;

Fig. 3 shows characteristic data illustrating COP with respect to an ambient temperature and a hot water temperature of a pump according to Embodiment 1;

Fig. 4 shows input data and output data of the design support apparatus 100 according to Embodiment 1;

Fig. 5 shows a generation screen of an equipment flow according to Embodiment 1;

Fig. 6 is a flowchart showing operations of a calculation part 7 according to Embodiment 1;

Fig. 7 illustrates hunting in controlling according to Embodiment 2;

Fig. 8 shows a performance correction program and a defrosting operation control program according to Embodiment 3;

Fig. 9 shows a calculation condition including an upper limit value of $CO_2$ emission amount according to Embodiment 4;

Fig. 10 shows a control program conversion part according to Embodiment 5;

Fig. 11 shows a hardware configuration of the design support apparatus 100 according to Embodiment 6;

Fig. 12 shows a flowchart of calculation of the design support apparatus 100 according to Embodiment 6;

Fig. 13 shows an example of appearance of the design support apparatus 100 according to Embodiment 7; and

Fig. 14 shows an example of the hardware configuration of the design support apparatus 100 according to Embodiment 7.

DESCRIPTION OF EMBODIMENTS

Embodiment 1

Embodiment 1 describes a design support apparatus 100 (operation state simulation apparatus) which performs a simulation of a heat pump type hot-water supply system.

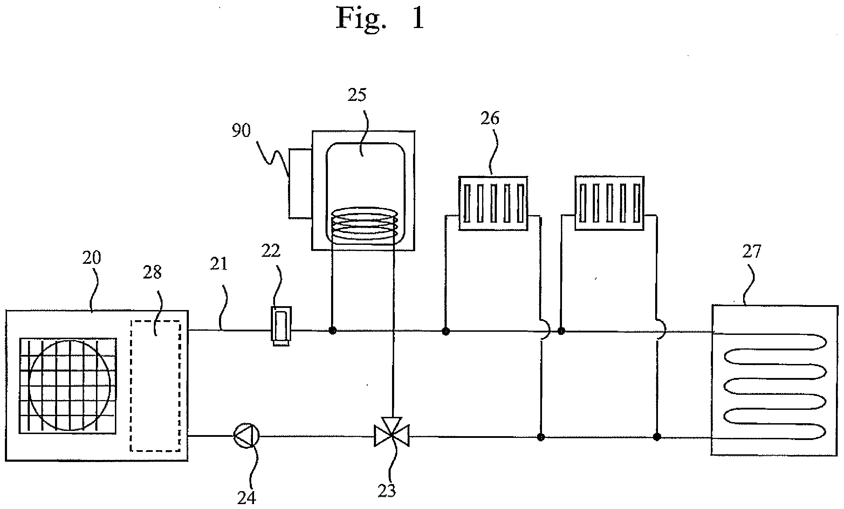

Fig. 1 shows an example of a heat pump type hot-water supply system. In Fig. 1, there is shown an example where a system controller 90 is stored in a box in which a hot-water supply tank 25 is installed. A heat pump 20, being a heat source device, takes heat from the outside by a refrigeration cycle, and warms water via a water heat exchanger 28 stored in the heat pump outdoor unit or via the water heat exchanger 28 connected to the exterior of the outdoor unit, and thereby hot water flows through a pipe 21.

If the heat pump 20 breaks down or its capability temporarily decreases, the warming is continued by using, for example, an electric heater as an auxiliary heat source 22. Depending on the operation state of a motor-operated valve 23 and a circulating pump 24, hot water is supplied to the hot-water supply tank 25, a radiator of the heating equipment, a fan coil unit 26, or floor heating 27.

It is structured such that supplying heat to the hot-water supply equipment and to the heating equipment are not performed simultaneously, but is structured to perform switching the operation to either of them by the motor-operated valve 23. When the hot-water supply tank 25 is a direct heating type, hot water flowing through the pipe 21 is used as it is, and when it is an indirect heating type, hot water further warmed via heat exchanging equipment in the hot-water supply tank 25 is used.

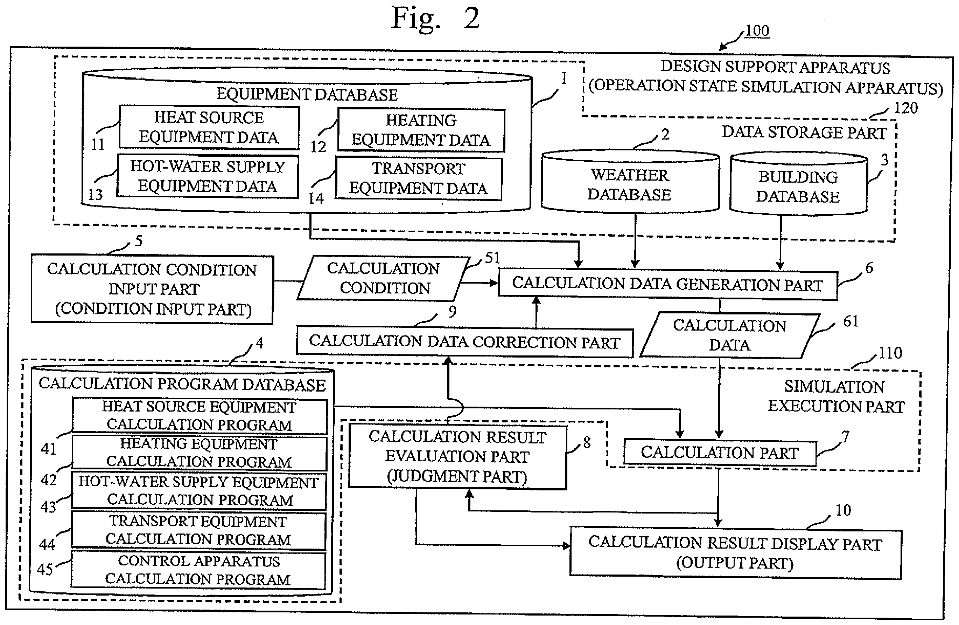

Fig. 2 shows a block diagram of the design support apparatus 100 of the heat pump type hot-water supply system. The design support apparatus 100 includes an equipment database 1, a weather database 2, a building database 3, a calculation program database 4, a calculation condition input part 5 (condition input part), a calculation data generation part 6, a calculation part 7, a calculation result evaluation part 8 (judgment part), a calculation data correction part 9, and a calculation result display part 10 (output part) which displays a calculation result of the calculation part 7.

The equipment database 1 includes heat source equipment data 11, heating equipment data 12, hot-water supply equipment data 13, and transport equipment data 14. The calculation program database 4 includes a heat source equipment calculation program 41, a heating equipment calculation program 42, a hot-water supply equipment calculation program 43, a transport equipment calculation program 44, and a control apparatus calculation program 45.

Further, the heat source equipment calculation program 41, the heating equipment calculation program 42, the hot-water supply equipment calculation program 43, the transport equipment calculation program 44, and the control apparatus calculation program 45 are programs that perform simulation of the heat source equipment, the heating equipment, the hot-water supply equipment, the transport equipment, and the control apparatus (system controller) of the heat pump type hot-water supply system.

The calculation part 7 executes these programs and generates a calculation result (simulation result information) including an operation state of the heat pump type hot-water supply system. An input calculation condition 51 (design specifications) can be evaluated according to the simulation result information.

The equipment database 1, the weather database 2, and the building database 3 are stored in a data storage part 120. The data storage part 120 is, for example, a magnetic disk drive to be later described in Embodiment 7. A simulation execution part 110 which performs a simulation is composed of the calculation program database 4 and the calculation part 7. Each part will be described hereafter.

Heat source equipment data 11

The heat source equipment data 11 of the equipment database 1 represents structure data or characteristic data per machine type of the heat pump 20 and a boiler or an electric heater being the auxiliary heat source 22. The structure data represents what is related to a physical shape, such as a fin pitch of the heat exchanger. The characteristic data represents what is related to capability of the heat pump 20, such as COP (Coefficient of Performance) with respect to an ambient temperature, and what is related to characteristics of a heat pump configuration element, such as a heat-exchanger heat transfer coefficient.

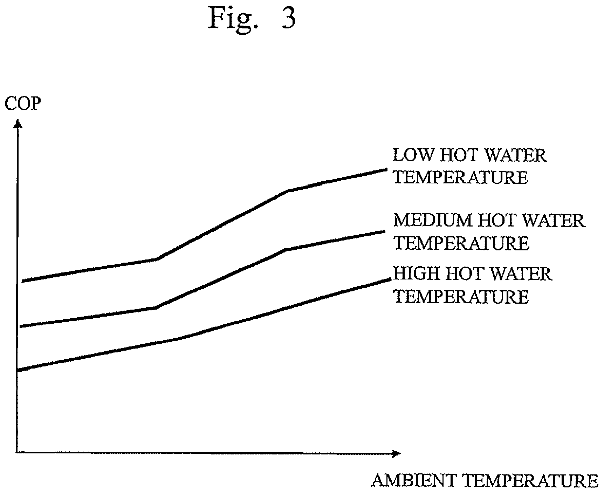

Fig. 3 shows an example of characteristic data, illustrating a relation among an ambient temperature, a hot water temperature, and COP. With regard to the characteristic data, it is acceptable to use data in a catalog, or data obtained from a collection result of operation data of a delivered product.

Heating equipment data 12

The heating equipment data 12 represents structure or characteristic data per machine type or capacity of a radiator, floor heating, and a fan coil unit. For example, in the case of floor heating, there are included physical shape data, such as pipe pitch and a construction type of panel or buried in concrete, and characteristic data, such as a floor heat transfer coefficient per construction method.

Hot-water supply equipment data 13

The hot-water supply equipment data 13 includes at least the shape of a tank, the size of a tank, or a heat transfer coefficient of a tank wall. With regard to the tank shape, it is possible to select it from the structures registered in advance, such as coil-in-tank type wherein a pipe for flowing hot water is inserted in a coil state inside the tank, and tank-in-tank type wherein another tank is installed in the tank, hot water is flowed between the two tanks, and warming is performed through the wall of the inner tank, Further, there is included data relating to the size and material of the tank.

Transport equipment data 14

The transport equipment data 14 is data relating to equipment of a transport route, such as a pump, a valve, and a pipe, and, for example, in the case of a pump, it represents characteristic data of flow quantity, pressure, and engine.

Weather database 2

The weather database 2 is composed of ambient temperature data of major cities, which includes temperature data, at intervals of one hour at longest, for one or several years. When using the data, it is acceptable to use the data for a long period of time, such as one year or more, or alternatively, acceptable to use the data of only representative day selected in each season.

Building database 3

The building database 3 includes data relating to a construction type of a room, such as wall material and floor material, and to a coefficient of overall heat transmission of heat emitted to the outside of the room from the construction. Since a new building differs in insulation efficiency from an existing building, the age of a building and data of a coefficient of overall heat transmission corresponding to the age may be included.

Calculation program database 4

The calculation program database 4 includes the heat source equipment calculation program 41, the heating equipment calculation program 42, the hot-water supply equipment calculation program 43, the transport equipment calculation program 44, and the control apparatus calculation program 45.

(1) The heat source equipment calculation program 41 can calculate a supplied heat quantity, an energy efficiency, COP, etc. of a heat source, such as a heat pump, a boiler, and an electric heater (auxiliary heat source).
(2) The heating equipment calculation program 42 can calculate a supplied heat quantity of heating equipment, such as a radiator, a fan coil unit, and floor heating, a heat quantity which flows out from a room, and a room temperature which is varied by a difference between the supplied heat quantity and the heat flowing-out quantity.
(3) The hot-water supply equipment calculation program 43 can calculate a quantity of heat which is supplied to a hot-water supply tank, a quantity of heat which comes and goes by supplying hot-water and supplying water, a quantity of heat which flows out from the tank wall, and a water temperature in the tank which varies by a difference among these heat quantities.
(4) The transport equipment calculation program 44 calculates a quantity of heat transferred to posterior equipment by the transport equipment, such as a pump, a valve, and a pipe.
(5) The control apparatus calculation program 45 determines the operation state of heat source equipment, a pump, and a valve.

Calculation condition input part 5

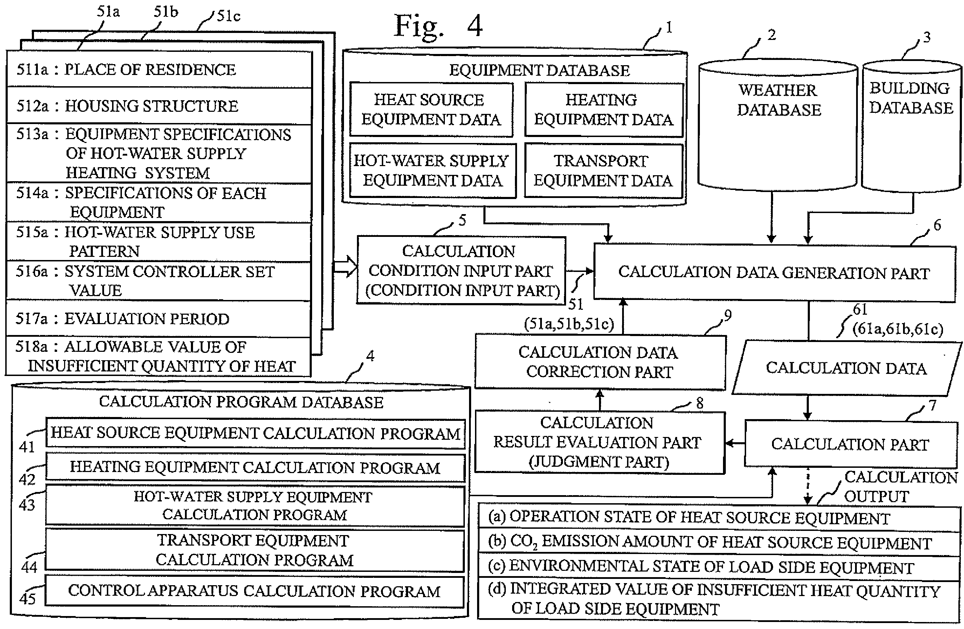

Fig. 4 shows inputs and outputs of the design support apparatus 100. The calculation condition input part 5 inputs the calculation condition 51 as an input. Fig. 4 shows the case of inputting plural calculation conditions 51a, 51b, 51c, etc. that are different conditions. In the case of inputting the plural calculation conditions 51a, 51b, 51c, etc., calculation data 61a, 61b, and 61c to be described later corresponding to the respective calculation conditions are generated.
For example, the calculation condition 51a includes the following respective data:

(1) Place of residence 511a
(2) Housing structure 512a
(3) Equipment structure 513a of hot-water supply heating system
(4) Specifications 514a of each equipment
(5) Hot-water supply use pattern 515a
(6) Set value 516a of system controller 90
(7) Evaluation period 517a
(8) Allowable value 518a of insufficient quantity of heat Items of the calculation conditions 51b and 51c are the same as those of the calculation condition 51a.

Equipment structure 513 of hot-water supply heating system

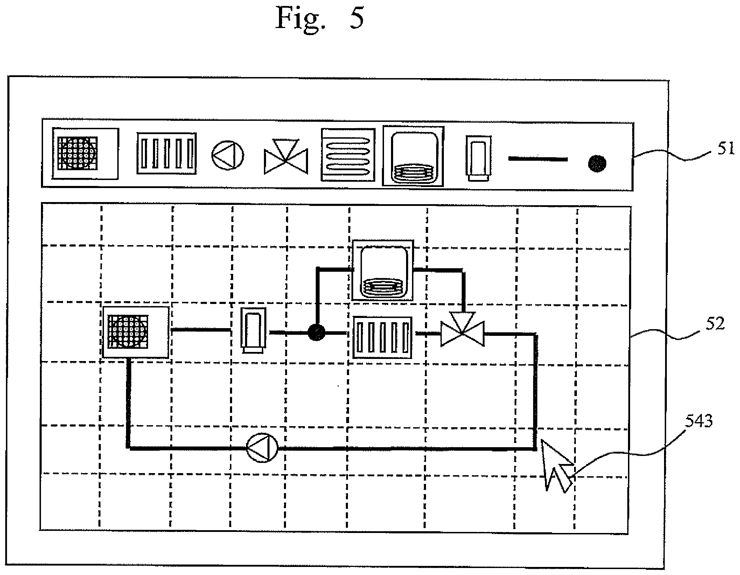

The equipment structure 513 of the hot-water supply heating system is made in a flow sheet 52 of the equipment flow structure screen exemplified in Fig. 5. First, using a pointing device 54, an icon 53 of equipment which has been registered in advance is pointed. Next, when pointing at an arbitrary position of the flow sheet 52, equipment of the selected icon 53 is displayed on the screen. The icon displayed on the flow sheet 52 is called a node.

When two nodes are pointed, a straight line or a broken line indicating a pipe is connected. The line connecting two nodes is called a link. With regard to the connected two nodes, one at the calculation upstream side is called a parent node and the other one at the downstream side is called a child node.

### Specifications 514 of equipment

The specifications 514 of equipment can be input into the node and the link via a parameter setting screen. With regard to a node of heating equipment, data is input relating to structure of housing, such as a width, a wall material, and a window size of a room where heating equipment is installed.

### Hot-water supply use pattern 515

With regard to the hot-water supply use pattern 515, a usage amount may be directly input, or alternatively, selection may be made from typical usage amount patterns stored in the database as items, such as a family structure, a morning shower, cooking, and a night bath.

### Set value 516 of system controller

With regard to the set value 516 of the system controller, values are input which are used as target values, such as a hot water temperature, a room temperature, and a tank water temperature, in the control apparatus calculation program 45 to be described later.

### Evaluation period 517

At least one year is set as the evaluation period 517, but alternatively, a longer period may be set.

### Allowable value 518 of insufficient quantity of heat

The allowable value 518 of an insufficient quantity of heat is given by a value whose unit is [(temperature difference from a target value) $\times$ time], and will be used when the calculation result evaluation part 8 to be described later judges whether to leave a calculation result or refuse it.

### Calculation data generation part 6

With regard to the calculation condition 51 input through the calculation condition input part 5, the calculation data generation part 6 extracts temperature data of the city corresponding to the residence data 511 from the weather database 2, extracts data of a coefficient of overall heat transmission of the construction material corresponding to the housing structure data 512 of the room where the heating equipment is installed from the building database 3, extracts data of the machine type, structure, and characteristics of the equipment corresponding to the specifications data of a node and a link generated in the flow sheet 52 from the equipment database 1, and combines them with other calculation condition 51 to generate calculation data 61.

In the case of a plurality of calculation conditions such as the calculation conditions 51a, 51b, and 51c being input, the calculation data generation part 6 generates calculation data 61a, 61b, and 61c corresponding to each calculation condition.

### Calculation part 7

As shown in Fig. 4, by using the calculation data 61 and each calculation program of the calculation program database 4, the calculation part 7 calculates:

(a) Operation state of heat source equipment,
(b) $CO_2$ emission amount of heat source equipment,
(c) Environmental state of load side equipment, such as a water temperature of hot-water supply equipment and a room temperature of heating equipment, and
(d) Integrated value of an insufficient quantity of heat at load side equipment, such as hot-water supply equipment and heating equipment.

In the case of a plurality of calculation conditions such as the calculation conditions 51a, 51b, and 51c being input, the calculation part 7 generates calculation information for each calculation condition.

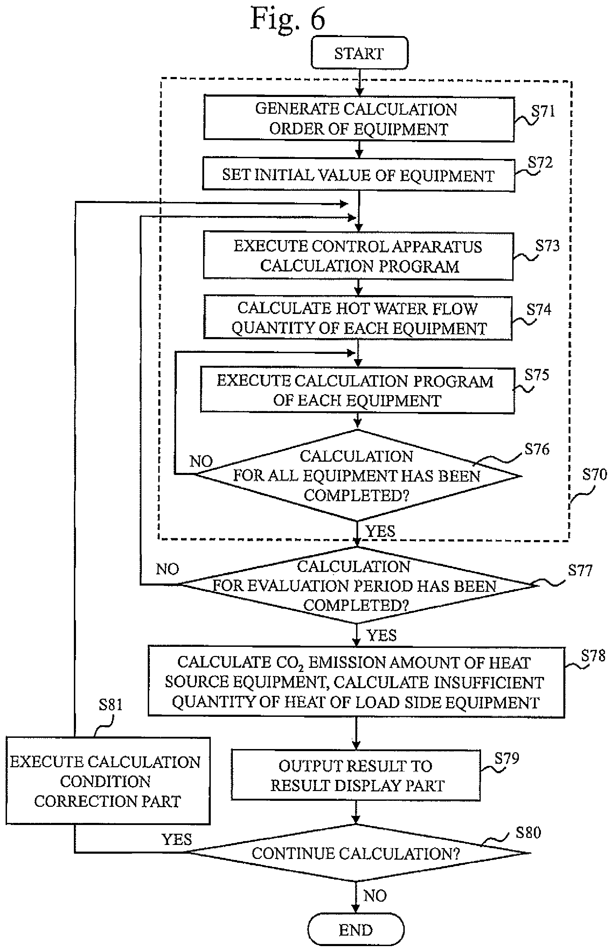

Fig. 6 is a flowchart showing processing of the calculation part 7. With reference to this flowchart, explanation will be described. When the calculation part 7 starts calculation,

(1) first, in a calculation order generation step S71 for equipment, the calculation part 7 calculates an order of calculation of each equipment, based on connection data of nodes and links. Although the equipment flow has a loop structure as shown in Fig. 1, it is possible to proceed searching similarly to a tree structure, even in the loop structure, by assigning a calculation order in order of searching using depth first search which searches data of a tree structure, and by regarding a parent node which has not been searched, if such exists, as a terminal node.

(2) Next, in an initial value setting step S72 for equipment, the calculation part 7 sets an initial value in a calculation program of each equipment in the calculation program database 4 by extracting data of the concerned equipment from the calculation data 61.

(3) In an execution step S73 of the control apparatus calculation program 45, the calculation part 7 executes the control apparatus calculation program 45. By executing the control apparatus calculation program 45, the calculation part 7 refers to data (the set value 516 of the system controller), being a control target value of a control objective node, such as a hot water temperature of a heat pump, a water temperature of a hot-water supply tank, a room temperature of floor heating, and, according to a calculation program, obtains ON/OFF and a operation capability of a heat pump, an auxiliary heat source, a pump, and a valve.

(4) Control results of a pump and a valve in the obtained control results are used in a step S74 which calculates a hot water flow quantity of each equipment. In the step S74, a hot water quantity flowing through each equipment is calculated by fluid pipeline network calculation.

Execution of calculation program of each equipment

In a step S75 which executes a calculation program of equipment, the calculation part 7 executes the calculation programs 41 to 44 of each equipment according to the equipment calculation order obtained in the step S71. For example, regarding a node (corresponding to the heat source equipment calculation program 41) of the heat pump, calculation results relating to energy, such as a supplied heat quantity, a $CO_2$ emission amount, and COP, are output by using the characteristic data of Fig. 3 or by performing refrigeration cycle calculation.

Regarding a hot-water supply equipment node and a heating equipment node at the load side (corresponding to the heating equipment calculation program 42 or the hot-water supply equipment calculation program 43), the following calculation will be performed, for example. A heat quantity supplied from hot water is calculated by the following Equation (1) of heat transfer. A change of a tank water temperature or a room temperature by a supplied heat quantity is calculated by the following Equation (2). The heat transfer coefficient of the equation (1) may be calculated from a Nusselt number, without treating it as a fixed value.

$$Qw = KA\ (Tw\text{-}T_L) \qquad\qquad \dots (1)$$

$$T_L' = T_L + Qw / (C_p \rho V / \Delta t) \qquad\qquad \dots (2)$$

wherein

Qw = heat quantity (kW) supplied from hot water
K = heat transfer coefficient (kW/m$^2$) between hot water and inside of a room or a tank
A = Heat transfer area (m$^2$)
Tw = Hot water temperature (°C)
$T_L$ = Room temperature or tank water temperature (°C)
Cp = Specific heat (kJ/kg °C) of water or air
$\rho$ = Density (kg/m$^3$) of water or air
V = Volume (m$^3$) of a room or a tank
$\Delta t$ = Calculation step (s)
$T_L'$ = Room temperature or tank water temperature (°C) after temperature change

On the other hand, the quantity of heat which flows out of the room or tank to the outside air can be calculated by treating the heat transfer coefficient in the Equation (1) as a heat transfer coefficient from the inside of a room or a tank to the outside air, and treating the temperature difference in the Equation (1) as a temperature difference between the ambient temperature and the room temperature or tank water temperature.

A temperature decrease caused by heat dissipation can be calculated by similarly performing calculation of the Equation (2) after obtaining the quantity of heat which flows out. Although a temperature distribution at the heat transfer portion in the room, the inside of the hot-water supply tank or the inside of the heating equipment, or the hot-water supply tank is not considered in the Equations (1) and (2), it is acceptable to calculate a detailed temperature distribution by a coupled analysis of heat conduction and fluid.

Insufficient quantity of heat calculation

When a room temperature or a tank water temperature is lower than a target value (the set value 516 of the system controller) of the control apparatus calculation program 45, an insufficient quantity of heat is calculated by [temperature difference $\times$ duration time]. When exceeding the target value, since it indicates that there is a surplus quantity of heat, the calculation is not performed.

The transport equipment calculation program 44 performs a calculation of giving and receiving heat between the heat source equipment and the hot-water supply equipment or heating equipment, and then, when there is loss of heat from the piping, a heat transfer from the piping surface to the outside air is calculated.

The calculation part 7 performs the calculation described above with respect to all the equipment. If the calculation with respect to all the equipment has been completed (YES in step S76), the state advances to the next time section, and calculation in the next time section is performed from the execution step S73 of the control apparatus calculation program 45. Advancing the time section, the calculation is repeated, and when the calculation for the evaluation period has been completed (YES in step S77), the calculation part 7 totals amounts of $CO_2$ emission in the whole evaluation period of the heat source equipment and also totals insufficient quantities of heat of the load side equipment in step S78.

In step S79, the calculation part 7 makes the calculation result display part 10 suitably display the following etc. in a graph, in numerals, or in a table.

(1) Calculation condition 51
(2) $CO_2$ emission amount of heat source equipment
(3) Insufficient quantity of heat of load side equipment
(4) Operation state of each equipment

Calculation result evaluation part 8

When calculation for a predetermined period has been completed, the calculation result evaluation part 8 judges whether to continue or terminate the calculation depending upon the number of times of the calculation (step S80). For making a judgment on terminating the calculation (NO in step S80), it is also acceptable to apply a method (an example of a predetermined method) of generating an evaluation value by processing an insufficient quantity of heat and an amount of $CO_2$ emission, and of terminating the calculation when the evaluation value is lower than a threshold value.

Moreover, by using a multiple-objective optimization method, such as a genetic algorithm or MOPSO (Multi Objective Particle Swarm Optimization), the calculation result evaluation part 8 judges whether the insufficient quantity of heat and the amount of $CO_2$ emission according to the present calculation condition are included in a Pareto optimal solution or not, and, when not included, rejects the calculation result, and when included, outputs the calculation condition and the calculation result to the calculation result display part 10 by using a table, a graph, and numerals.

Alternatively, if calculation for a predetermined period has been completed, only when the insufficient quantity of heat of the calculation result is within an allowable value, it is acceptable for the calculation result evaluation part 8 to make the calculation result display part 10 display the calculation result and the calculation condition 51 concerned.

Further, when a plurality of calculation conditions, such as the calculation conditions 51a and 51b, are input in the calculation condition input part 5, it is also acceptable for the calculation result evaluation part 8 to make the calculation result display part 10 display only the calculation result in which the calculated insufficient quantity of heat is within the range of an allowable value of heat insufficient quantity included in the corresponding calculation condition.

Calculation data correction part 9

When continuing the calculation, the calculation data correction part 9 generates the calculation data 61 again by calculating data to be corrected and its correction amount in the calculation condition by using a multiple-objective optimization method (an example of a predetermined method), or by extracting another data from the equipment database 1 (an example of a predetermined method) (step S81). The simulation execution part 110 generates a calculation result (simulation result information) again by using the calculation data corrected by the calculation data correction part 9.

By employing the structure as described above, an insufficient quantity of heat can be maintained within an allowable range and design specifications of a heat pump type hot-water supply system with small amount of $CO_2$ emission can be obtained. Thus, it is possible to improve the working efficiency of the designer.

Embodiment 2

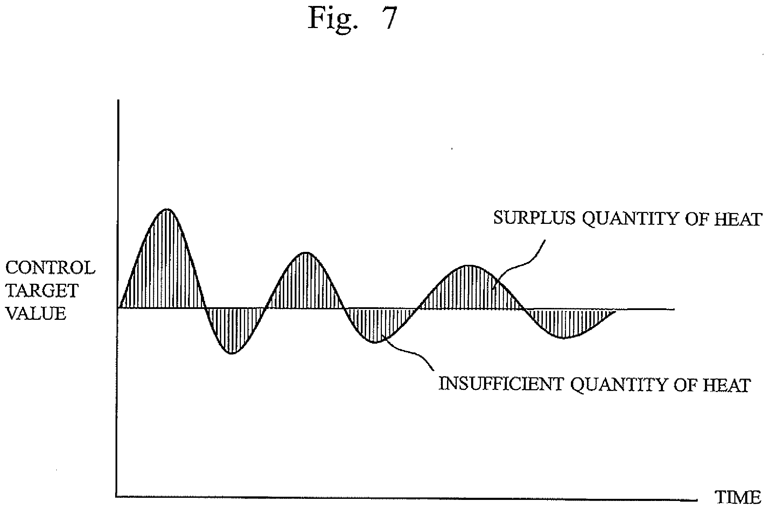

Embodiment 2 will be described with reference to Fig. 7. Embodiment 2 relates to a countermeasure for control hunting. As an evaluation value of the calculation result evaluation part 8, an integrated value of a surplus quantity of heat and an insufficient quantity of heat may be added.

When capacity of heat source equipment or a control width of performance is too large, it sometimes happens that hunting is repeated such that, with respect to a control target value, the operation result (operation state) becomes greater than the set value (the set value 516 of the system controller) and, immediately after that, becomes less than it as shown in Fig. 7. As a result of such hunting, when evaluation is performed using a total value of $CO_2$ emission amount at each time section, the evaluation result is not necessarily low. However, such state is not appropriate in controlling.

Therefore, in order to find a control design value with a small amount of hunting, it is acceptable, by using an integrated value of a surplus quantity of heat and an insufficient quantity of heat, to specify the calculation condition 51 having a smaller integrated value (for example, a calculation condition with a minimum integrated value of a surplus heat quantity and an insufficient heat quantity in the calculation conditions 51a to 51c).

As a method of expressing excess and deficiency of heat quantity, not only adding respective integrated values of a surplus quantity of heat and an insufficient quantity of heat but also expressing it as an excess and deficiency heat quantity vector using a surplus quantity of heat and an insufficient quantity of heat as orthogonal components may be used,

With regard to the operation, the simulation execution part 110 generates a calculation result (simulation result information) including an insufficient quantity of heat and a surplus quantity of heat of the heat pump type hot-water supply system. The calculation result evaluation part 8 (judgment part) judges whether to discard or maintain the calculation result, based on the insufficient heat quantity included in the calculation result and an integrated value (or an excess and deficiency heat quantity vector) of the insufficient quantity of heat and the surplus quantity of heat.

By this structure, design specifications of a heat pump type hot-water supply system with a small amount of control hunting can be obtained. Therefore, it is possible to prevent to have a design based on superfluous capacity of equipment or a rough control width, Further, it is possible to obtain design specifications of a heat pump type hot-water supply system with a small amount of $CO_2$ emission and a small amount of control hunting.

Embodiment 3

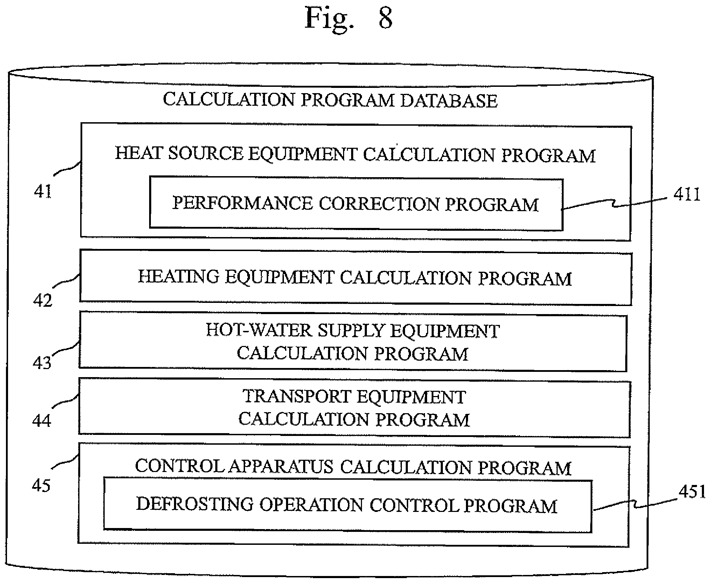

Embodiment 3 will be described with reference to Fig. 8. In Embodiment 3, the case where simulation of a defrosting operation is reflected in calculating an insufficient quantity of heat will be explained. In the case of applying the heat pump type hot-water supply system in a cold district, as frost adheres to the heat exchanger of the outdoor unit when the temperature is low, it causes a decrease of a heat transfer coefficient. Since performance of the heat exchanger remarkably falls if the frost grows, a defrosting operation which melts and removes the frost is performed.

As an example of the defrosting operation, there is a method of switching the circuit of the heat pump so that refrigerant of a high temperature may flow in the outdoor heat exchanger, and thus the frost is melted and removed by the refrigerant of a high temperature. When performing the defrosting operation, since a heat quantity obtained by a refrigeration cycle of the heat pump is used for melting the frost, heat cannot be supplied to the hot-water supply equipment and the heating equipment.

In order to simulate this phenomenon, as shown in Fig. 8, the heat source equipment calculation program 41 includes a performance correction program 411 which decreases a supplied heat quantity in a predetermined temperature range in which frost is easy to attach. Moreover, the control apparatus calculation program 45 includes a defrosting operation control program 451 which monitors an ambient temperature or COP of the outdoor unit, estimates performance degradation of the heat pump due to frost attaching so as to start a defrosting operation, and judges the time to stop it.

By the structure shown in Fig. 8, it is possible to accurately grasp a performance degradation state in a cold district and to design a control for preventing a shortage of heat quantity as much as possible.

As shown in Fig. 8, the control apparatus calculation program 45 includes the defrosting operation control program 451 which orders starting and stopping a defrosting operation of melting and removing frost attached to the heat exchanger of the outdoor unit of a heat pump. When judged to start a defrosting operation, the simulation execution part 110 calculates an insufficient quantity of heat of the hot-water supply equipment and that of the heating equipment on the assumption that input energy of the heat pump has been used for the defrosting operation.

By this structure, it is possible to grasp a decrease of COP of the heat pump caused by a defrosting operation and grasp an extent of influence on the hot-water supply equipment and the heating equipment given by a shortage of heat at the time of the defrosting operation.

As described above, the heat pump type hot-water supply system includes the outdoor unit having a heat exchanger, as a heat pump. The control apparatus calculation program 45 executed by the simulation execution part 110 includes the defrosting operation control program 451 which simulates a defrosting operation of removing frost attached to the heat exchanger. When the simulation of the defrosting operation is performed, the simulation execution part 110 generates a calculation result (simulation result information) including an insufficient quantity of heat in which the defrosting operation has been reflected.

Embodiment 4

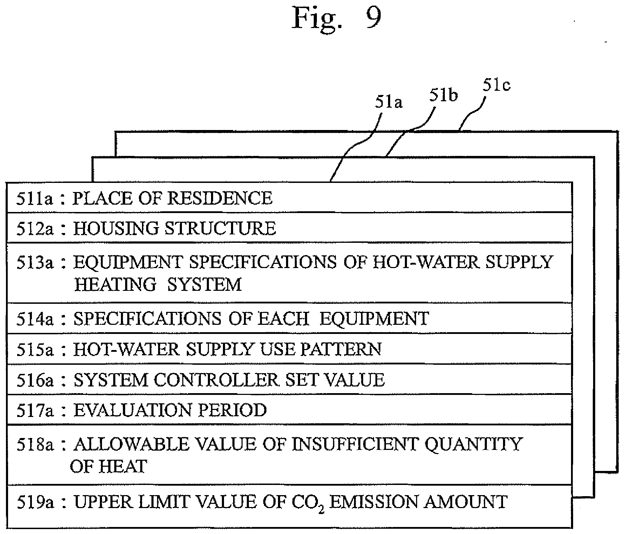

Embodiment 4 will be described with reference to Fig. 9. In Embodiment 4, the case of adding an upper limit value of an amount of $CO_2$ emission to the calculation condition 51 will be explained.

With the passage of time, equipment performance, as compared with the one at the time of installation, may be reduced such as contamination of the heat exchanger and an insulation fall of the house. Consequently, there is a possibility of a shortage of heat quantity or an increased amount of $CO_2$ emission resulting from avoiding the shortage of heat quantity.

Therefore, an upper limit value of $CO_2$ emission amount is added to the calculation condition 51, and it is added to the evaluation value of the calculation result evaluation part 8, thereby obtaining a judgment condition for keeping the current calculation condition in which an optimal solution is that, even if the performance falls, the $CO_2$ emission amount does not exceed the upper limit value for the assumed period of years for use.

As shown in Fig. 9, the calculation condition 51 includes a period of years for use (evaluation period 517) of equipment, and a $CO_2$ emission amount upper limit value 519. The calculation data correction part 9 corrects characteristic data of a heat pump, heating equipment, hot-water supply equipment, and a building in the calculation data 61 in order to have lower performance year by year, for example, (an example of a division period) in the calculation period of years for use.

The calculation result execution part 110 performs a calculation using the calculation data 61 being corrected characteristic data. As a result of calculation for each year by the simulation execution part 110, if a $CO_2$ emission amount exceeds the $CO_2$ emission upper limit value 519, the calculation result evaluation part 8 makes the simulation result display part 10 (output part) display (output) the number of years as an equipment renewal time.

By employing the structure as described above, it is possible to obtain equipment specifications according to which operations can be performed without producing necessity for equipment renewal for the assumed period of years for use. That is, by this structure, since an increased amount of $CO_2$ emission caused by aged deterioration of equipment can be estimated, it is possible to obtain design specifications of equipment whose performance can be maintained for the assumed period of years for use.

As described above, the calculation condition 51 (simulation condition) to be input into the calculation condition input part 5 includes the allowable value 518 of insufficient quantity of heat which is allowed for the heat pump type hot-water supply system, and the upper limit value 519 of amount of carbon dioxide emission which is allowed for the heat pump type hot-water supply system (Fig. 9). The calculation data correction part 9 corrects the calculation data 61 by reflecting aged deterioration therein every time when passes a predetermined division period made by dividing the period of years for use (evaluation period) into plural ones.

The simulation execution part 110 calculates a total amount of carbon dioxide emission of the heat pump type hot-water supply system for from starting the evaluation period to the present period by making each of the calculation programs 41 to 45 execute the calculation data in which the aged deterioration has been reflected by the calculation data correction part 9, The calculation result evaluation part 8 (judgment part) judges whether the total amount of carbon dioxide emission calculated by the simulation execution part 110 exceeds the upper limit value 519 of amount of carbon dioxide emission.

In the case that the calculation result evaluation part 8 judges to have exceeded the upper limit value of the carbon dioxide emission amount, the calculation result display part 10 outputs a total period from starting the evaluation period to the division period which is judged to have exceeded the upper limit value of the carbon dioxide emission amount.

Embodiment 5

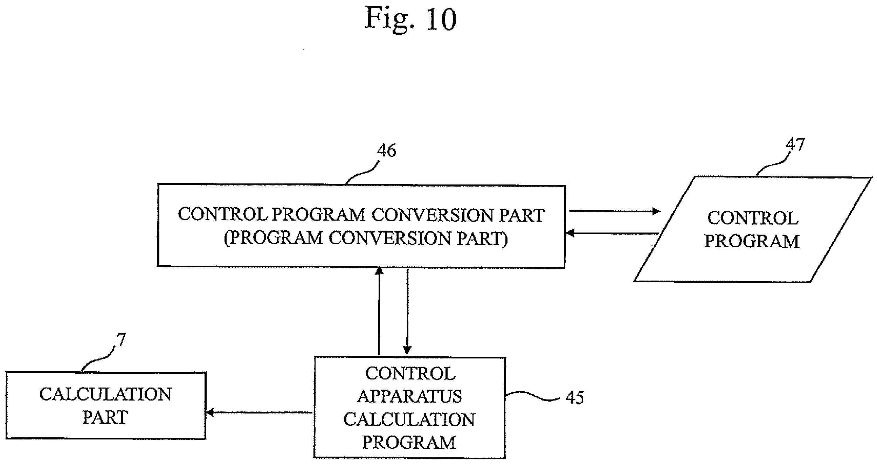

Embodiment 5 will be described with reference to Fig. 10. In Embodiment 5, there is described the case where the design support apparatus 100 includes a control program conversion part 46 (program conversion part) which can convert a program of the system controller 90 to a program executable by the calculation part 7, and which converts the control apparatus calculation program 45 to a program form executable by the system controller 90.

The control apparatus calculation program 45 may be a control program 47 (Fig. 10) which is actually installed in the system controller 90 of the heat pump type hot-water supply system. However, it is necessary to provide format correspondence between programming languages and input/output data. Therefore, the control program conversion part 46 converts the control program 47 to be installed in the system controller 90 to a program equivalent to the control apparatus calculation program 45.

Then, the calculation part 7 uses the converted program as the control apparatus calculation program 45. Moreover, when the control apparatus calculation program 45 is newly added, the control program conversion part 46 converts the newly added control apparatus calculation program 45 to the control program 47.

By employing the structure as described above, it is possible to immediately verify whether a newly developed program of the system controller 90 can perform an operation with a small amount of $CO_2$ emission or not, and in the case of developed as the control apparatus calculation program 45 in the design support apparatus 100, a program which is immediately installable, after its function being verified, in an actual machine of system controller 90 can be obtained.

As described above, the heat pump type hot-water supply system, being a target of simulation, includes a system controller which controls the system. The calculation program executed by the simulation execution part 110 includes the control apparatus calculation program 45 which performs a simulation of the system controller 90.

The design support apparatus 100 includes the control program conversion part 46 which can convert the control program 47 installed in the system controller 90 to the control apparatus calculation program 45, and can convert the control apparatus calculation program 45 to the control program 47.

Embodiment 6

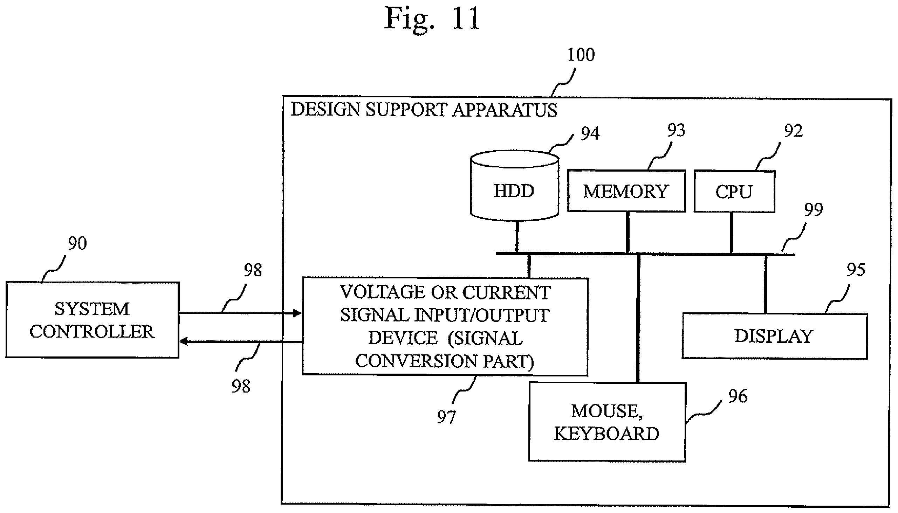

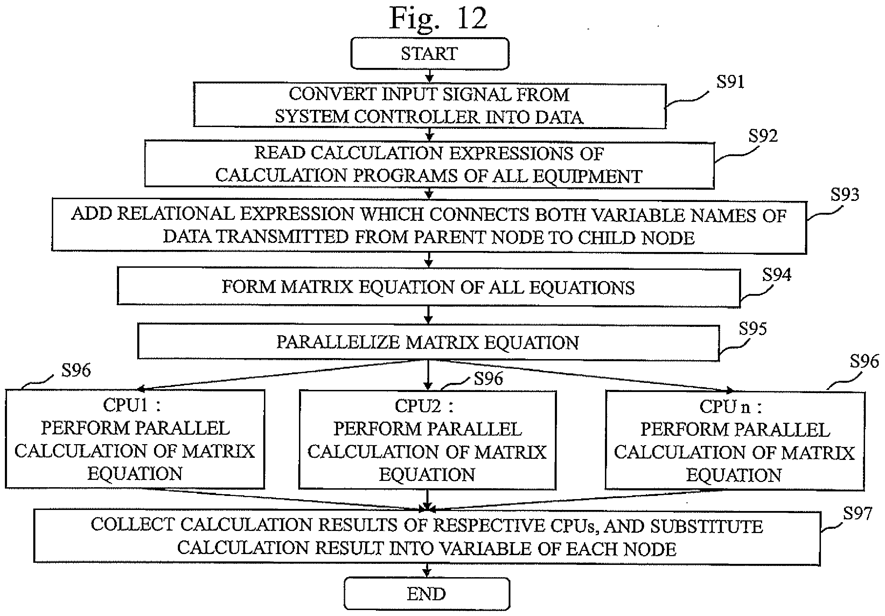

Embodiment 6 will be described with reference to Figs. 11 and 12. According to Embodiment 6, the design support apparatus 100 includes a signal input/output device 97 which converts a result of calculation by the simulation execution part 110 into a signal of voltage or current so as to output it to the system controller 90 and which converts a control signal of voltage or current output from the system controller 90 into calculation data.

The design support apparatus 100 of the heat pump type hot-water supply system shown in Fig. 11 includes the "voltage or current signal input/output device 97" (hereinafter called the signal input/output device 97). By connecting the signal input/output device 97 (signal conversion part) and the system controller 90, the design support apparatus 100 can perform actual machine verification of the system controller 90. The signal input/output device 97 converts calculation data which is to be referred to by the system controller 90 into a voltage or current signal so as to feed it to the system controller 90. The voltage or current signal (control signal) output from the system controller 90 is converted into the calculation data 61 through the signal input/output device 97 (signal conversion part).

When applying the structure described above, since connection is performed with the actual machine of the system controller 90, it is necessary to execute calculation in real time. To this end, since quicker calculation capability is required for the design support apparatus 100, a plurality of CPUs (Central Processing Units) may be installed in one design support apparatus 100, or a plurality of apparatuses may be connected via a network to configure a parallel computer. Thus, the design support apparatus executes calculation in real time using one or plural CPUs.

In order to parallelize the calculation, the step S70 of Fig. 6 is replaced by the calculation flow (S91 to S97) of Fig. 12. First, in step S92, all the equations of all the equipment are read. Then, since variable names of data received and transmitted between a parent node and a child node do not correspond with each other, a relational expression which connects both the variables is added in step S93.

Next, in step S94, a matrix equation is formed using all the equations of all the nodes, and in step S95, the matrix is parallelized. As for the method of solving a matrix equation by parallelization, there are various methods, such as an LU decomposition. In step S96, elements of the parallel matrix equation are respectively assigned to a plurality of CPUs, and each CPU performs calculation in parallel. In step S97, calculation results are collected, and then substituted into the variable of each original node. Steps after this are the same as those described in Embodiment 1.

By employing the structure as described above, it is possible for the design support apparatus 100 to simulate behaviors of each equipment in real time, and since necessary data can be received and transmitted through the voltage or current input/output device 97, it can be used for actual machine verification of the system controller 90.

As described above, the heat pump type hot-water supply system includes a system controller which controls the system and performs inputting and outputting of signals. The design support apparatus 100 includes a signal input/output device (signal conversion part) which, when inputting data, converts it to a signal and, when inputting a signal, converts it to data.

The simulation execution part 110, while executing calculation in real time using at least one CPU, converts calculation data of an execution result to a signal in real time by the signal input/output device 97 in order to output it to the system controller 90, inputs a signal, which was output by the system controller 90, from the signal input/output device 97, converts the input signal to calculation data by using the signal input/output device 97, and executes calculation based on the converted calculation data using the above-described at least one CPU.

Embodiment 7

Embodiment 7 describes an example of the hardware configuration of the design support apparatus 100 according to Embodiments 1 to 6.

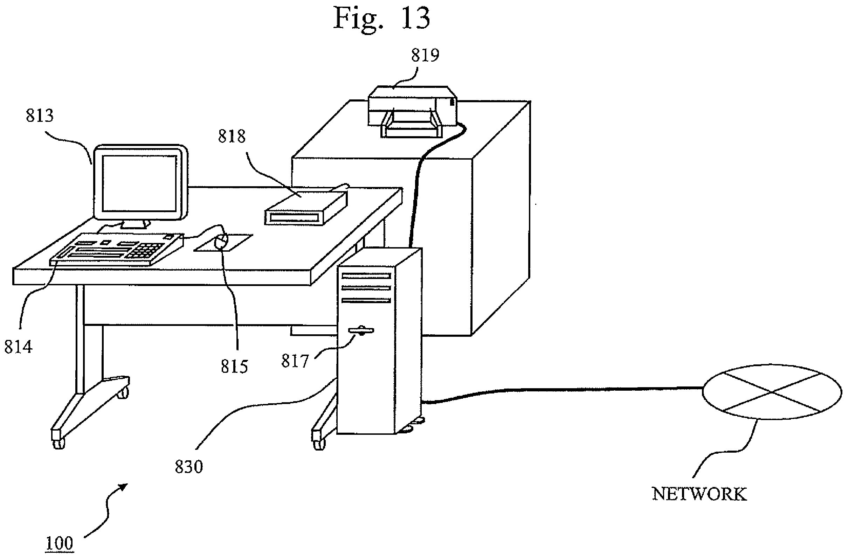

Fig. 13 shows an example of the appearance of the design support apparatus 100 which is realized by the computer. In Fig. 13, the design support apparatus 100 includes hardware resources, such as a system unit 830, a display device 813 having a display screen of CRT (Cathode Ray Tube) or LCD (Liquid Crystal Display), a keyboard 814 (K/B), a mouse 815, an FDD 817 (Flexible Disk Drive), a compact disk drive 818 (CDD), and a printer 819, and these are connected through cables and signal lines.

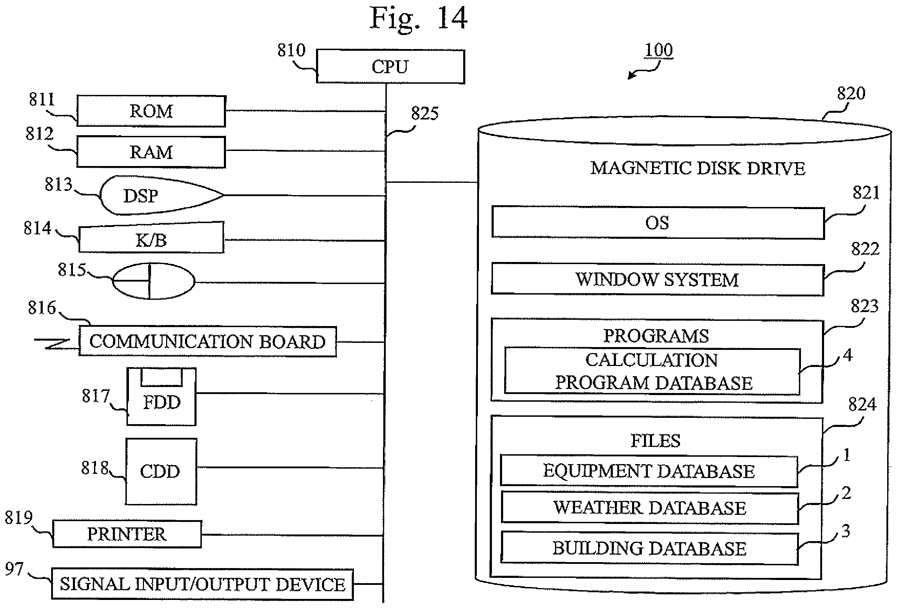

Fig. 14 shows an example of the hardware resources of the design support apparatus 100 which is realized by the computer. In Fig. 14, the design support apparatus 100 includes a CPU 810 which executes programs. The CPU 810 is connected via a bus 825 to a ROM (Read Only Memory) 811, a RAM (Random Access Memory) 812, the display device 813, the keyboard 814, the mouse 815, a communication board 816, the FDD 817, the CDD 818, the printer 819, and a magnetic disk drive 820, and controls these hardware devices. A storage device, such as an optical disk device or a flash memory, may be employed in place of the magnetic disk drive 820.

The RAM 812 is an example of a volatile memory. The storage media, such as the ROM 811, the FDD 817, the CDD 818, the magnetic disk drive 820, etc., are examples of a nonvolatile memory. These are examples of a storage drive, a storage part, a storing part, or a buffer. The communication board 816, the keyboard 814, the FDD 817, etc. are examples of an input part or an input device. The communication board 816, the display device 813, the printer 819, etc. are examples of an output part or an output device.

The communication board 816 is connected to a network (Local Area Network etc.). The communication board 816 may be connected not only to a LAN but also to a WAN (wide area network), such as the Internet, ISDN, etc.

In the magnetic disk drive 820, an operating system 821 (OS), a window system 822, programs 823, and files 824 are stored. A program in the programs 823 is executed by the CPU 810, the operating system 821, and the window system 822.

In the programs 823, there are stored programs that execute functions each described as a "... part" in the explanation of the above-mentioned Embodiments. Moreover, a series of programs described as the calculation program database 4 is stored. The programs are read out and executed by the CPU 810.

In the files 824, pieces of information described in the above Embodiments are stored: information explained as "equipment database 1", "weather database 2", or "building database 3", information explained as "calculation condition 51", "calculation data 61", or simulation result information, etc., and information explained as "... judgment result", ".... calculation result", "... extraction result", "... generation result", or "... processing result", and further, data, signal values, variable values, parameters, etc. are stored as respective items of "... files" and "... databases". The ".. files" and the "... databases" are stored in the recording medium, such as a disk or a memory.

The information, data, signal values, variable values, and parameters stored in the storage medium, such as a disk or a memory, are loaded into a main memory or a cache memory by the CPU 810 through a read/write circuit, and used for CPU operations, such as extraction, search, reference, comparison, operation, computation, processing, output, printing, and display.

During the CPU operations such as, extraction, search, reference, comparison, operation, computation, processing, output, printing, and display, the information, data, signal values, variable values, and parameters are temporarily stored in the main memory, the cache memory, or a buffer memory.

Moreover, in the explanation of Embodiments described above, data and signal values are recorded on a recording medium, such as a memory of the RAM 812, a flexible disk of the FDD 817, a compact disk of the CDD 818, a magnetic disk of the magnetic disk drive 820, and other optical disk, such as a mini disk and a DVD (Digital Versatile Disk). Further, the data and signals are on-line transmitted through the bus 825, signal lines, cables, or other transmission media.

Moreover, what is described as " ... part" in the above Embodiments may be "... means", "... circuit", or " ... device", or alternatively it may be " ... step", "... procedure", or " ... processing". That is, what is described as " ... part" may be implemented by firmware stored in the ROM 811. Otherwise, it may be implemented by software only, hardware only such as an element, a device, a substrate, and a wire, or by a combination of software and hardware, or alternatively by a combination further with firmware.

The firmware and software are stored as programs in a recording medium, such as a magnetic disk, a flexible disk, and an optical disk, such as a compact disk, a mini disk, and a DVD. The programs are read out and executed by the CPU 810. That is, the programs cause a computer function as " ... part" described above. Alternatively, the programs cause a computer execute procedures or methods of " ... part" described above.

The design support apparatus 100 has been explained in the above Embodiments 1 to 6, but it is also possible to grasp the operation of the design support apparatus 100 as a design support method (design method for a heat pump type hot-water supply system) performed by the design support apparatus 100. Moreover, it is also possible to grasp it as a design support program which causes a computer execute the design support method. Further, it is also possible to grasp it as a computer-readable recording medium on which the design support program is recorded.

REFERENCE SIGNS LIST

| 1 | Equipment database |
| 2 | =Weather database |
| 3 | Building database |
| 4 | Calculation program database |
| 5 | Calculation condition input part |
| 6 | Calculation data generation part |
| 7 | Calculation part |
| 8 | Calculation result evaluation part |
| 9 | Calculation data correction part |
| 10 | Calculation result display part |
| 11 | Heat source equipment data |
| 12 | Heating equipment data |
| 13 | Hot-water supply equipment data |
| 14 | Transport equipment data |
| 20 | Heat pump |
| 21 | Pipe |
| 22 | Auxiliary heat source |
| 23 | Motor-operated valve |
| 24 | Pump |
| 25 | Tank |
| 26 | Radiator or Fan coil unit |
| 27 | Floor heating |
| 28 | Water heat exchanger |
| 41 | Heat source equipment calculation program |
| 42 | Heating equipment calculation program |
| 43 | Hot-water supply equipment calculation program |
| 44 | Transport equipment calculation program |
| 45 | Control apparatus calculation program |
| 46 | Control program conversion part |
| 47 | Control program |
| 51 | Calculation condition |
| 52 | Flow sheet |
| 53 | Icon |
| 54 | Pointing device |
| 61 | Calculation data |
| 70 | Calculation program execution step of each equipment |
| 90 | System controller |
| 92 | CPU |
| 93 | Memory |
| 94 | HDD |
| 95 | Display |
| 96 | Mouse keyboard |
| 97 | Voltage or current signal input/output device |
| 98 | Voltage or current signal |
| 99 | Bus |
| 100 | Design support apparatus |

**Claims**

**1.** An operation state simulation apparatus (100) for simulating an operation state of a heat pump type hot-water supply system which supplies hot water by using a heat pump, comprising:

- a condition input part (5) configured to input a simulation condition for simulating the heat pump type hot-water supply system;
- a simulation execution part (110) configured to execute a calculation program which has been set in advance, based on the simulation condition having been input in the condition input part (5), so as to generate simulation result information which includes an operation state of the heat pump type hot-water supply system and an insufficient quantity of heat in the operation state; and
- an output part (10) configured to output the simulation result information generated by the simulation execution part (110),
- wherein the simulation execution part (110) generates the simulation result information including an amount of carbon dioxide emission emitted by the heat pump type hot-water supply system,
- wherein the condition input part (5) inputs a plurality of the simulation conditions, and
- wherein the simulation execution part (110) generates the simulation result information for each of the plurality of the simulation conditions,
- **characterized in that** the plurality of the simulation conditions to be input into the condition input part (5) include an allowable value of insufficient quantity of heat which is allowed for the heat pump type hot-water supply system, and
- wherein the output part (10) outputs only the simulation result information in which the insufficient quantity of heat calculated by executing the calculation program is within a range of the allowable value of insufficient quantity of heat included in the simulation condition corresponding to the simulation result information including a calculated insufficient quantity of heat.

2. A design method for a heat pump type hot-water supply system which supplies hot water by using a heat pump performed by the operation state simulation apparatus (100) according to claim 1,
comprising the following steps:

- an input step of inputting a simulation condition for simulating the heat pump type hot-water supply system;
- an execution step (S71 to S78) of executing a calculation program which has been in advance, based on the simulation condition, so as to generate simulation result information which includes an operation state of the heat pump type hot-water supply system and an insufficient quantity of heat in the operation state; and
- an output step (S79) of outputting the simulation result information,

wherein the simulation result information includes an amount of carbon dioxide emission emitted by the heat pump type hot-water supply system, and
wherein the execution step (S71 to S78) generates, with respect to a plurality of simulation conditions respectively, the simulation result information for each of the plurality of simulation conditions, **characterized in that** the plurality of simulation conditions include an allowable value of insufficient quantity of heat which is allowed for the heat pump type hot-water supply system, and
the output step (S79) outputs only the simulation result information within a range of the allowable value of insufficient quantity of heat.

3. Computer readable recording medium on which a program (41 to 45) for a design method for a heat pump type hot-water supply system which supplies hot water by using a heat pump is recorded, the program causing a computer to implement the following steps:

- an input step of inputting a simulation condition for simulating the heat pump type hot-water supply system;
- an execution step (S71 to S78) of executing a calculation program which has been in advance, based on the simulation condition, so as to generate simulation result information which includes an operation state of the heat pump type hot-water supply system and an insufficient quantity of heat in the operation state; and
- an output step (S79) of outputting the simulation result information,

wherein the simulation result information includes an amount of carbon dioxide emission emitted by the heat pump type hot-water supply system, and
wherein the execution step (S71 to S78) generates, with respect to a plurality of simulation conditions respectively, the simulation result information for each of the plurality of simulation conditions,
wherein the plurality of simulation conditions include an allowable value of insufficient quantity of heat which is allowed for the heat pump type hot-water supply system, and

the output step (S79) outputs only the simulation result information within a range of the allowable value of insufficient quantity of heat.

**Patentansprüche**

1. Betriebszustand-Simulationsvorrichtung (100) zum Simulieren des Betriebszustandes eines Warmwasserversorgungssystems vom Wärmepumpentyp, das Warmwasser unter Verwendung einer Wärmepumpe bereitstellt, wobei die Betriebszustand-Simulationsvorrichtung (100) Folgendes aufweist:

   - ein Bedingungs-Eingabeteil (5), das dazu ausgebildet ist, eine Simulationsbedingung zum Simulieren des Warmwasserversorgungssystems vom Wärmepumpentyp einzugeben;
   - ein Simulations-Ausführungsteil (110), das dazu ausgebildet ist, ein Berechnungsprogramm auszuführen, das im Voraus eingestellt worden ist, und zwar basierend auf der Simulationsbedingung, die in dem Bedingungs-Eingabeteil (5) eingegeben worden ist, um Simulationsergebnis-Informationen zu erzeugen, die einen Betriebszustand des Warmwasserversorgungssystems vom Wärmepumpentyp und eine unzureichende Wärmemenge in dem Betriebszustand aufweisen; und
   - ein Ausgabeteil (10), das dazu ausgebildet ist, die von dem Simulations-Ausführungsteil (110) erzeugten Simulationsergebnis-Informationen auszugeben,
   - wobei das Simulations-Ausführungsteil (110) die Simulationsergebnis-Informationen erzeugt, die einen Wert von Kohlenstoffdioxidemissionen aufweisen, die von dem Warmwasserversorgungssystem vom Wärmepumpentyp emittiert werden,
   - wobei das Bedingungs-Eingabeteil (5) eine Vielzahl von Simulationsbedingungen eingibt, und
   - wobei das Simulations-Ausführteil (110) die Simulationsergebnis-Informationen für jede Simulationsbedingung der Vielzahl von Simulationsbedingungen erzeugt,

   **dadurch gekennzeichnet,**
   **dass** die Vielzahl von Simulationsbedingungen, die in das Bedingungs-Eingabeteil (5) eingegeben werden sollen, einen zulässigen Wert für eine unzureichende Wärmemenge aufweist, die für das Warmwasserversorgungssystem vom Wärmepumpentyp zulässig ist, und

   - wobei das Ausgabeteil (10) nur die Simulationsergebnis-Informationen ausgibt, bei denen die unzureichende Wärmemenge, die durch Ausführen des Berechnungsprogramms berechnet worden ist, innerhalb eines Bereichs des zulässigen Werts für die unzureichende Wärmemenge liegt, welche in der den Simulationsergebnis-Informationen zugehörigen Simulationsbedingung enthalten ist, wobei die Simulationsergebnis-Informationen eine berechnete unzureichende Wärmemenge aufweisen.

2. Konstruktionsverfahren für ein Warmwasserversorgungssystem vom Wärmepumpentyp, das Warmwasser unter Verwendung einer Wärmepumpe bereitstellt, die von einer Betriebszustands-Simulationsvorrichtung (100) gemäß Anspruch 1 durchgeführt wird, wobei das Konstruktionsverfahren folgende Schritte aufweist:

   - einen Eingabeschritt zum Eingeben einer Simulationsbedingung zum Simulieren des Warmwasserversorgungssystems vom Wärmepumpentyp;
   - einen Ausführungsschritt (S71 bis S78) zum Ausführen eines Berechnungsprogramms, das im Voraus vorgegeben worden ist, und zwar basierend auf der Simulationsbedingung, um Simulationsergebnis-Informationen zu erzeugen, die einen Betriebszustand des Warmwasserversorgungssystems vom Wärmepumpentyp und eine unzureichende Wärmemenge in dem Betriebszustand aufweisen; und
   - einen Ausgabeschritt (S79) zum Ausgeben der Simulationsergebnis-Informationen,
   - wobei die Simulationsergebnis-Informationen einen Wert von Kohlenstoffdioxidemissionen aufweisen, welche von dem Warmwasserversorgungssystem vom Wärmepumpentyp emittiert werden, und
   - wobei der Ausführungsschritt (S71 bis S78), mit Bezug auf eine Vielzahl von jeweiligen Simulationsbedingungen, die Simulationsergebnis-Informationen für jede Simulationsbedingung der Vielzahl von Simulationsbedingungen erzeugt,

   **dadurch gekennzeichnet,**
   **dass** die Vielzahl von Simulationsbedingungen einen zulässigen Wert für eine unzureichende Wärmemenge aufweist, die für das Warmwasserversorgungssystem vom Wärmepumpentyp zulässig ist, und

**dass** der Ausgabeschritt (S79) nur die Simulationsergebnis-Informationen ausgibt, die innerhalb eines Bereichs des zulässigen Werts der unzureichenden Wärmemenge liegen.

3. Computerlesbares Speichermedium, auf dem ein Programm (41 bis 45) für ein Konstruktionsverfahren für ein Warmwassersystem vom Wärmepumpentyp, das Warmwasser unter Verwendung einer Wärmepumpe bereitgestellt, aufgezeichnet ist, wobei das Programm einen Computer veranlasst, die folgenden Schritte auszuführen:

- einen Eingabeschritt zum Eingeben einer Simulationsbedingung zum Simulieren des Warmwasserversorgungssystems vom Wärmepumpentyp;
- einen Ausführungsschritt (S71 bis S78) zum Ausführen eines Berechnungsprogramms, das im Voraus vorgegeben worden ist, und zwar basierend auf der Simulationsbedingung, um Simulationsergebnis-Informationen zu erzeugen, die einen Betriebszustand des Warmwasserversorgungssystems vom Wärmepumpentyp und eine unzureichende Wärmemenge in dem Betriebszustand aufweisen; und
- einen Ausgabeschritt (S79) zum Ausgeben der Simulationsergebnis-Informationen,

wobei die Simulationsergebnis-Informationen einen Wert von Kohlenstoffdioxidemissionen aufweisen, die von dem Warmwasserversorgungssystem vom Wärmepumpentyp emittiert werden, und

wobei der Ausführungsschritt (S71 bis S78), mit Bezug auf eine Vielzahl von jeweiligen Simulationsbedingungen, die Simulationsergebnis-Informationen für jede Simulationsbedingung der Vielzahl von Simulationsbedingungen erzeugt, wobei die Vielzahl von Simulationsbedingungen einen zulässigen Wert für eine unzureichende Wärmemenge aufweist, die für das Warmwasserversorgungssystem vom Wärmepumpentyp zulässig ist, und

wobei der Ausgabeschritt (S79) nur die Simulationsergebnis-Informationen ausgibt, die innerhalb eines Bereichs des zulässigen Werts der unzureichenden Wärmemenge liegen.

## Revendications

1. Appareil de simulation d'état de fonctionnement (100) pour simuler un état de fonctionnement d'un système d'alimentation en eau chaude du type pompe à chaleur qui fournit de l'eau chaude en utilisant une pompe à chaleur, comprenant :

- une partie d'entrée de condition (5) configurée pour fournir en entrée une condition de simulation pour simuler le système d'alimentation en eau chaude du type pompe à chaleur ;
- une partie d'exécution de simulation (110) configurée pour exécuter un programme de calcul qui a été défini à l'avance, sur la base de la condition de simulation ayant été fournie en entrée dans la partie d'entrée de condition (5), pour générer des informations de résultat de simulation qui incluent un état de fonctionnement du système d'alimentation en eau chaude du type pompe à chaleur et une quantité insuffisante de chaleur dans l'état de fonctionnement ; et
- une partie de sortie (10) configurée pour fournir en sortie les informations de résultat de simulation générées par la partie d'exécution de simulation (110),
- dans lequel la partie d'exécution de simulation (110) génère les informations de résultat de simulation incluant une quantité d'émission de dioxyde de carbone émise par le système d'alimentation en eau chaude du type pompe à chaleur,
- dans lequel la partie d'entrée de condition (5) fournit en entrée une pluralité des conditions de simulation et
- dans lequel la partie d'exécution de simulation (110) génère les informations de résultat de simulation pour chacune de la pluralité de conditions de simulation,

**caractérisé en ce que**

- la pluralité des conditions de simulation à fournir en entrée dans la partie d'entrée de condition (5) inclut une valeur admissible de quantité insuffisante de chaleur qui est admissible pour le système d'alimentation en eau chaude du type pompe à chaleur et
- dans lequel la partie de sortie (10) fournit en sortie uniquement les informations de résultat de simulation dans lesquelles la quantité insuffisante de chaleur calculée en exécutant le programme de calcul est dans une plage de la valeur admissible de quantité insuffisante de chaleur incluse dans la condition de simulation correspondant aux informations de résultat de simulation incluant une quantité insuffisante de chaleur calculée.

2. Procédé de conception d'un système d'alimentation en eau chaude du type pompe à chaleur qui fournit de l'eau chaude en utilisant une pompe à chaleur, exécuté par l'appareil de simulation d'état de fonctionnement (100) selon la revendication 1,

comprenant les étapes suivantes :

- une étape d'entrée consistant à fournir en entrée une condition de simulation pour simuler le système d'alimentation en eau chaude du type pompe à chaleur ;
- une étape d'exécution (S71 à S78) consistant à exécuter un programme de calcul qui a été défini à l'avance, sur la base de la condition de simulation, pour générer des informations de résultat de simulation qui incluent un état de fonctionnement du système d'alimentation en eau chaude du type pompe à chaleur et une quantité insuffisante de chaleur dans l'état de fonctionnement ; et
- une étape de sortie (S79) consistant à fournir en sortie les informations de résultat de simulation,

dans lequel les informations de résultat de simulation incluent une quantité d'émission de dioxyde de carbone émise par le système d'alimentation en eau chaude du type pompe à chaleur, et

dans lequel l'étape d'exécution (S71 à S78) génère, respectivement par rapport à une pluralité de conditions de simulation, les informations de résultat de simulation pour chacune de la pluralité de conditions de simulation,

**caractérisée en ce que**

la pluralité de conditions de simulation inclut une valeur admissible de quantité insuffisante de chaleur qui est admissible pour le système d'alimentation en eau chaude du type pompe à chaleur et

l'étape de sortie (S79) fournit en sortie uniquement les informations de résultat de simulation dans une plage de la valeur admissible de quantité insuffisante de chaleur.

3. Support d'enregistrement lisible par ordinateur sur lequel est enregistré un programme (41 à 45) pour un procédé de conception d'un système d'alimentation en eau chaude du type pompe à chaleur qui fournit de l'eau chaude en utilisant une pompe à chaleur, le programme amenant un ordinateur à exécuter les étapes suivantes :

- une étape d'entrée consistant à fournir en entrée une condition de simulation pour simuler le système d'alimentation en eau chaude du type pompe à chaleur ;
- une étape d'exécution (S71 à S78) consistant à exécuter un programme de calcul qui a été défini à l'avance, sur la base de la condition de simulation, pour générer des informations de résultat de simulation qui incluent un état de fonctionnement du système d'alimentation en eau chaude du type pompe à chaleur et une quantité insuffisante de chaleur dans l'état de fonctionnement ; et
- une étape de sortie (S79) consistant à fournir en sortie les informations de résultat de simulation,

dans lequel les informations de résultat de simulation incluent une quantité d'émission de dioxyde de carbone émise par le système d'alimentation en eau chaude du type pompe à chaleur et

dans lequel l'étape d'exécution (S71 à S78) génère, respectivement par rapport à une pluralité de conditions de simulation, les informations de résultat de simulation pour chacune de la pluralité de conditions de simulation,

dans lequel la pluralité de conditions de simulation inclut une valeur admissible de quantité insuffisante de chaleur qui est admissible pour le système d'alimentation en eau chaude du type pompe à chaleur et

l'étape de sortie (S79) fournit en sortie uniquement les informations de résultat de simulation dans une plage de la valeur admissible de quantité insuffisante de chaleur.

EP 2 395 292 B1

# Fig. 1

## Fig. 2

EP 2 395 292 B1

# Fig. 3

EP 2 395 292 B1

# Fig. 4

**EQUIPMENT DATABASE** (1)

| HEAT SOURCE EQUIPMENT DATA | HEATING EQUIPMENT DATA |
|---|---|
| HOT-WATER SUPPLY EQUIPMENT DATA | TRANSPORT EQUIPMENT DATA |

**WEATHER DATABASE** (2)

**BUILDING DATABASE** (3)

511a : PLACE OF RESIDENCE (51a, 51b, 51c)

512a : HOUSING STRUCTURE

513a : EQUIPMENT SPECIFICATIONS OF HOT-WATER SUPPLY HEATING SYSTEM

514a : SPECIFICATIONS OF EACH EQUIPMENT

515a : HOT-WATER SUPPLY USE PATTERN

516a : SYSTEM CONTROLLER SET VALUE

517a : EVALUATION PERIOD

518a : ALLOWABLE VALUE OF INSUFFICIENT QUANTITY OF HEAT

**CALCULATION CONDITION INPUT PART (CONDITION INPUT PART)** (5)

51 (51a, 51b, 51c)

**CALCULATION DATA GENERATION PART** (6)

61 (61a, 61b, 61c)

**CALCULATION DATA CORRECTION PART** (9)

**CALCULATION DATA** (61)

**CALCULATION PROGRAM DATABASE** (4)

| HEAT SOURCE EQUIPMENT CALCULATION PROGRAM | 41 |
| HEATING EQUIPMENT CALCULATION PROGRAM | 42 |
| HOT-WATER SUPPLY EQUIPMENT CALCULATION PROGRAM | 43 |
| TRANSPORT EQUIPMENT CALCULATION PROGRAM | 44 |
| CONTROL APPARATUS CALCULATION PROGRAM | 45 |

**CALCULATION RESULT EVALUATION PART (JUDGMENT PART)** (8)

**CALCULATION PART** (7)

CALCULATION OUTPUT

(a) OPERATION STATE OF HEAT SOURCE EQUIPMENT

(b) $CO_2$ EMISSION AMOUNT OF HEAT SOURCE EQUIPMENT

(c) ENVIRONMENTAL STATE OF LOAD SIDE EQUIPMENT

(d) INTEGRATED VALUE OF INSUFFICIENT HEAT QUANTITY OF LOAD SIDE EQUIPMENT

Fig. 5

EP 2 395 292 B1

# Fig. 6

START

GENERATE CALCULATION ORDER OF EQUIPMENT    S71

SET INITIAL VALUE OF EQUIPMENT    S72

EXECUTE CONTROL APPARATUS CALCULATION PROGRAM    S73

CALCULATE HOT WATER FLOW QUANTITY OF EACH EQUIPMENT    S74

EXECUTE CALCULATION PROGRAM OF EACH EQUIPMENT    S75

CALCULATION FOR ALL EQUIPMENT HAS BEEN COMPLETED?    S76    NO

S70

YES

CALCULATION FOR EVALUATION PERIOD HAS BEEN COMPLETED?    S77    NO

YES

CALCULATE $CO_2$ EMISSION AMOUNT OF HEAT SOURCE EQUIPMENT, CALCULATE INSUFFICIENT QUANTITY OF HEAT OF LOAD SIDE EQUIPMENT    S78

EXECUTE CALCULATION CONDITION CORRECTION PART    S81

OUTPUT RESULT TO RESULT DISPLAY PART    S79

CONTINUE CALCULATION?    S80    YES    NO

END

Fig. 7

## Fig. 8

EP 2 395 292 B1

CALCULATION PROGRAM DATABASE

41 — HEAT SOURCE EQUIPMENT CALCULATION PROGRAM

PERFORMANCE CORRECTION PROGRAM — 411

42 — HEATING EQUIPMENT CALCULATION PROGRAM

43 — HOT-WATER SUPPLY EQUIPMENT CALCULATION PROGRAM

44 — TRANSPORT EQUIPMENT CALCULATION PROGRAM

45 — CONTROL APPARATUS CALCULATION PROGRAM

DEFROSTING OPERATION CONTROL PROGRAM — 451

# Fig. 9

| | |
|---|---|
| 51a : PLACE OF RESIDENCE | |
| 512a : HOUSING STRUCTURE | |
| 513a : EQUIPMENT SPECIFICATIONS OF HOT-WATER SUPPLY HEATING SYSTEM | |
| 514a : SPECIFICATIONS OF EACH EQUIPMENT | |
| 515a : HOT-WATER SUPPLY USE PATTERN | |
| 516a : SYSTEM CONTROLLER SET VALUE | |
| 517a : EVALUATION PERIOD | |
| 518a : ALLOWABLE VALUE OF INSUFFICIENT QUANTITY OF HEAT | |
| 519a : UPPER LIMIT VALUE OF $CO_2$ EMISSION AMOUNT | |

51a   51b   51c

EP 2 395 292 B1

Fig. 10

```
                    46                                          47
  ┌─────────────────────────────────────────┐        ┌──────────────┐
  │   CONTROL PROGRAM CONVERSION PART        │ ─────> │   CONTROL    │
  │   (PROGRAM CONVERSION PART)              │ <───── │   PROGRAM    │
  └─────────────────────────────────────────┘        └──────────────┘
                          ↑  │
                          │  ↓
  ┌──────────────┐      ┌──────────────┐
  │              │      │   CONTROL    │
  │ CALCULATION  │ <─── │  APPARATUS   │── 45
  │    PART      │      │ CALCULATION  │
  │              │      │   PROGRAM    │
  └──────────────┘      └──────────────┘
         7
```

# Fig. 11

DESIGN SUPPORT APPARATUS 100

HDD 94

MEMORY 93

CPU 92

DISPLAY 99 95

SYSTEM CONTROLLER 90

98

98

VOLTAGE OR CURRENT SIGNAL INPUT/OUTPUT DEVICE (SIGNAL CONVERSION PART)

97

MOUSE, KEYBOARD 96

## Fig. 12

```
                        ┌─────────────┐
                        │    START    │
                        └─────────────┘
                               │
        ┌──────────────────────────────────────────┐
        │         CONVERT INPUT SIGNAL FROM          │  ╮ S91
        │       SYSTEM CONTROLLER INTO DATA          │
        └──────────────────────────────────────────┘
                               │
      ┌──────────────────────────────────────────────┐
      │       READ CALCULATION EXPRESSIONS OF          │  ╮ S92
      │   CALCULATION PROGRAMS OF ALL EQUIPMENT        │
      └──────────────────────────────────────────────┘
                               │
  ┌──────────────────────────────────────────────────────────┐
  │  ADD RELATIONAL EXPRESSION WHICH CONNECTS BOTH VARIABLE    │  ╮ S93
  │   NAMES OF DATA TRANSMITTED FROM PARENT NODE TO CHILD NODE │
  └──────────────────────────────────────────────────────────┘
                               │
     ┌──────────────────────────────────────────────┐
     │      FORM MATRIX EQUATION OF ALL EQUATIONS     │  ╮ S94
     └──────────────────────────────────────────────┘
                               │
     ┌──────────────────────────────────────────────┐
     │         PARALLELIZE MATRIX EQUATION            │  ╮ S95
     └──────────────────────────────────────────────┘
```

S96         S96         S96

| CPU1 : PERFORM PARALLEL CALCULATION OF MATRIX EQUATION | CPU2 : PERFORM PARALLEL CALCULATION OF MATRIX EQUATION | CPU n : PERFORM PARALLEL CALCULATION OF MATRIX EQUATION |
|---|---|---|

```
  ┌──────────────────────────────────────────────────────────┐
  │  COLLECT CALCULATION RESULTS OF RESPECTIVE CPUs, AND       │  ╮ S97
  │   SUBSTITUTE CALCULATION RESULT INTO VARIABLE OF EACH NODE │
  └──────────────────────────────────────────────────────────┘
                               │
                        ┌─────────────┐
                        │     END     │
                        └─────────────┘
```

Fig. 13

Fig. 14

MAGNETIC DISK DRIVE 820

100

821 OS

822 WINDOW SYSTEM

823 PROGRAMS
4 CALCULATION PROGRAM DATABASE

824 FILES
1 EQUIPMENT DATABASE
2 WEATHER DATABASE
3 BUILDING DATABASE

810 CPU

825

811 ROM
812 RAM
813 DSP
814 K/B
815
816 COMMUNICATION BOARD
817 FDD
818 CDD
819 PRINTER
97 SIGNAL INPUT/OUTPUT DEVICE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003120982 A

- JP 2003207189 A

**Non-patent literature cited in the description**

- Energy and CO2 emissions performance assessment of residential micro-cogeneration systems with dynamic whole-building simulation programs. **DORER V. et al.** ENERGY CONVERSION AND MANAGEMENT. ELSEVIER SCIENCE PUBLISHERS, 09 December 2008, vol. 50, 648-657